# EUROPÄISCHE PATENTSCHRIFT

(11) **EP 0 917 903 B1**
(45) Veröffentlichungstag und Bekanntmachung des Hinweises auf die Patenterteilung: **10.09.2003**
(21) Anmeldenummer: 98118709.9
(22) Anmeldetag: 02.10.1998
(51) Int. Cl.: B01D 45/08, F01M 11/08

(54) **Einfüllstutzen für einen Flüssigkeitsbehälter**
Filler tube for liquid containers
Tubulure de remplissage pour réservoir de liquide

(30) Priorität: 19.11.1997 DE 19751191
(43) Veröffentlichungstag der Anmeldung: 26.05.1999
(73) Patentinhaber: DaimlerChrysler AG, 70567 Stuttgart (DE)
(72) Erfinder: Bieler, Jens, 71155 Altdorf (DE); Pfund, Manfred, 71394 Kernen (DE); Werner, Peter, 71155 Altdorf (DE)

(56) Entgegenhaltungen:
- DE-A- 4 122 774
- DE-A- 19 653 515
- DE-C- 622 073
- DE-U- 7 900 607
- FR-A- 881 007
- GB-A- 2 260 503
- US-A- 967 895
- US-A- 2 538 195
- US-A- 4 627 861
- US-A- 5 024 687

## Beschreibung

Die Erfindung betrifft einen Einfüllstutzen für einen Flüssigkeitsbehälter nach dem Oberbegriff des Anspruches 1.

Aus der US-A-967 895 ist ein Einfüllstutzen für einen Kraftstoffbehälter bekannt. Der Einfüllstutzen weist axial und radial versetzt in den Einfüllstutzen einragende scheibenförmige Hindernisse auf, die Schikanen für einströmende Flüssigkeit und für ausströmendes Gas bilden. Die Durchtrittsöffnungen in den Hindernissen weisen eine in Draufsicht segmentförmige Querschnittsfläche auf, sie sind zur Scheibe hin gerade und zur Wandung des Einfüllstutzens hin teilkreisförmig ausgebildet. Von oben einströmende Flüssigkeit fällt auf das einragende Hindernis und strömt über die gerade Kante des Hindernisses weiter nach unten. Die gerade Kante bewirkt insbesondere bei langsam einströmender Flüssigkeit, daß ein Teil des Flüssigkeitsstromes aufgrund adhäsiver, kapillarähnlicher Kräfte auf die Unterseite des Hindernisses gelangt, wodurch ein kontinuierliches Einströmen behindert wird. Die Durchtrittsöffnungen weisen alle die gleiche Querschnittsfläche auf, so daß bei großen Durchtrittsöffnungen die Gefahr besteht, daß Gase mit unerwünscht hohem Flüssigkeitsanteil die Hindernisse passieren können und die Kondensationsrate zu gering ist.

Aus der DE-C-29 52 175 ist ein Einfüllstutzen für einen Kraftstoffbehälter bekannt, der als Teil des Stutzens ein Entlüftungsrohr aufweist, über das mit Kraftstoff angereicherte Gase aus dem Behälter bis zu einer Prallwand aufsteigen können, an der der Kraftstoff kondensiert. Die Prallwand ist als Teil der Rohrwandung des Einfüllstutzens in Form eines Krümmers ausgebildet, wobei aufgrund des nicht eindeutig definierten Strömungswegs lediglich ein Teil der Kraftstoffgase auf die gekrümmte Rohrwand auftrifft, so daß nicht mit Sicherheit alle Kraftstoffteilchen auskondensiert werden.

Bei Einfüllstutzen, über die Öl in einen Ölbehälter einfüllbar ist, tritt das Problem auf, daß bei tiefen Außentemperaturen aufgrund des Wasseranteils im Motorenöl Kondensatablagerungen im Sichtbereich des Öleinfüllstutzens und des -deckels auftreten. Diese Ablagerungen können dazu führen, daß fälschlicherweise ein zu hoher Wasseranteil im Öl diagnostiziert wird, was unnötige Reparaturmaßnahmen zur Folge haben kann. Diese Problem wird noch dadurch verstärkt, daß bei Verwendung eines Einfüllstutzens aus Kunststoff aufgrund der Affinität des Kunststoffs zu Wasser das abgesetzte Kondensat sich selbst bei einer Erwärmung nicht ohne weiteres verflüchtigt.

Es sind andererseits Ölabscheider bekannt, die Ölpartikel aus Gasen in Kurbelgehäusen abzuscheiden vermögen. Ein derartiger, beispielsweise in der EP 05 76 783 A1 offenbarter Ölabscheider umfaßt Schikanen im Strömungsweg des mit Öl angereicherten Gases, an denen sich das Öl niederschlägt, um die Ölkonzentration im Entlüftungsgas zu verringern. Dieser Ölabscheider ist aber nur dafür konzipiert, Öl und Gase aus dem Kurbelgehäuse abzuleiten. Ein Einfüllstutzen ist dagegen nicht vorgesehen, so daß diese Vorrichtung nicht die Möglichkeit bietet, Öl einzufüllen und zugleich zu verhindern, daß Feuchtigkeit aus der Luft, die aus dem Behälter aufsteigt, sich am oberen Bereich des Einfüllstutzens niederschlägt.

Der Erfindung liegt das Problem zugrunde, einen Einfüllstutzen für einen Flüssigkeitsbehälter, insbesondere für einen Ölbehälter einer Hubkolben-Brennkraftmaschine, so auszubilden, daß die Kondensatbildung im sichtbaren Bereich zuverlässig verhindert wird.

Diese Problem wird erfindungsgemäß mit den Merkmalen des Anspruches 1 gelöst.

Die Scheiben im Einfüllstutzen bilden einen Abscheider, an dem die Flüssigkeitströpfchen eines aus dem Behälter aufsteigenden Gases kondensieren. Die axial beabstandeten Scheiben bieten eine doppelte Sicherheit dafür, daß die Flüssigkeit auskondensiert. Die beiden Scheiben mit den versetzt zueinander angeordneten Durchtrittsöffnungen bilden eine Art Labyrinth, das vom Gas durchströmt werden muß, wobei die Unterseiten der Scheiben, die dem Behälter zugewandt liegen, eine Soll-Kondensationsfläche für die Feuchtigkeit bilden.

Zweckmäßig liegen die Durchtrittsöffnungen um 180° versetzt auf radial gegenüberliegenden Seiten der Scheiben, so daß ein verhältnismäßig langer Strömungsweg für das Gas gebildet ist und ausreichend Möglichkeit geschaffen wird, daß die Feuchtigkeit sich an den Scheiben niederschlagen kann.

Vorteilhaft überschneiden sich in der Projektion in Achsrichtung gesehen die Durchtrittsöffnungen in den Scheiben nicht, so daß in Achsrichtung kein durchgehender Strömungsweg ausgebildet ist und das aufsteigende Gas gezwungen ist, den Weg durch die Schikane zu nehmen.

In bevorzugter Ausführung sind die Durchtrittsöffnungen teilkreisförmig ausgebildet, wobei die Kreismittelpunkte jeder Öffnung auf radial gegenüberliegenden Seiten der Scheiben liegen, zweckmäßig auf einer Mittelebene durch den Einfüllstutzen. Die beiden Durchtrittsöffnungen haben etwa den gleichen Radius, insbesondere entspricht der Radius jeder Öffnung etwa dem Radius einer Scheibe, wobei der Mittelpunkt der unteren Scheibe außerhalb und der Mittelpunkt der oberen Scheibe innerhalb des Scheibenumfangs liegt. In dieser Ausführung ist die untere Durchtrittsöffnung kleiner ausgebildet als die obere Durchtrittsöffnung, so daß sich ein Großteil der Feuchtigkeit an der Unterseite der unteren Scheibe niederschlägt.

Vorzugsweise sind die beiden Scheiben winklig im Einfüllstutzen und auch winklig zueinander angeordnet, insbesondere mit einem Winkel von etwa 60°. Die Durchtrittsöffnungen liegen jeweils an der tiefsten Stelle der Scheibe, so daß eingefülltes Öl nach unten in den Behälter abströmen kann.

Die untere Scheibe ist vorteilhaft einteilig mit dem Einfüllstutzen ausgebildet, wohingegen die obere Scheibe Teil eines Rohrabschnitts ist, der in den Einfüllstutzen eingeführt wird und mit einem Stützflansch auf einer Ringschulter im Einfüllstutzen aufliegt.

Weitere Vorteile und zweckmäßige Ausführungsformen sind den weiteren Ansprüchen, der Figurenbeschreibung und den Zeichnungen zu entnehmen. Es zeigen:
- Fig. 1: ein Seitenansicht einer Hubkolben-Brennkraftmaschine mit einem seitlich angeordneten Ölbehälter,
- Fig. 2: einen Schnitt durch einen Einfüllstutzen eines Ölbehälters,
- Fig. 3: eine Ansicht gemäß der Schnittlinie III-III aus Fig. 2.

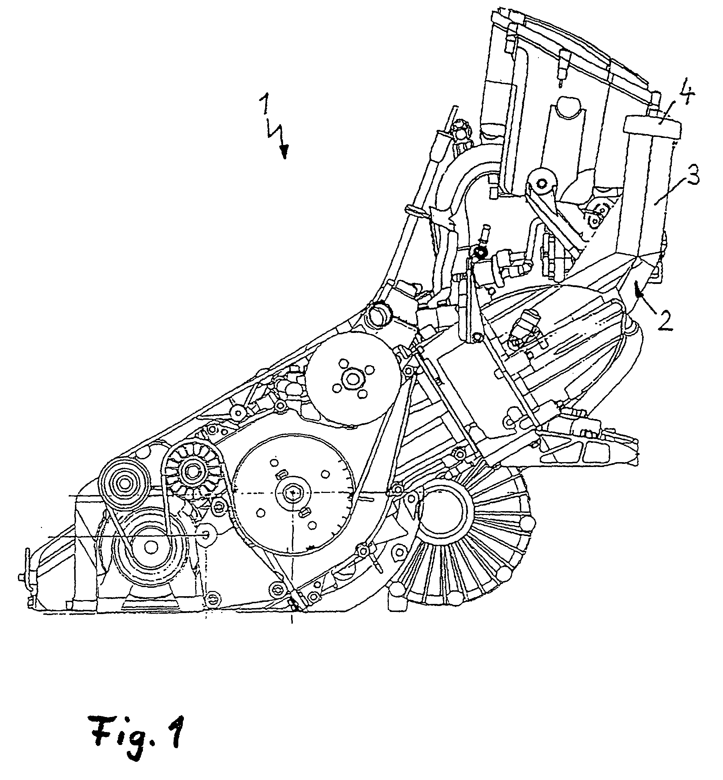

Gemäß Fig. 1 weist die Brennkraftmaschine 1 im Bereich der Zylinderkopfhaube einen seitlich angeordneten Ölbehälter 2 zur Aufnahme von Motorenöl auf, der über einen Einfüllstutzen 3 zu befüllen und von einem Deckel 4 zu verschließen ist.

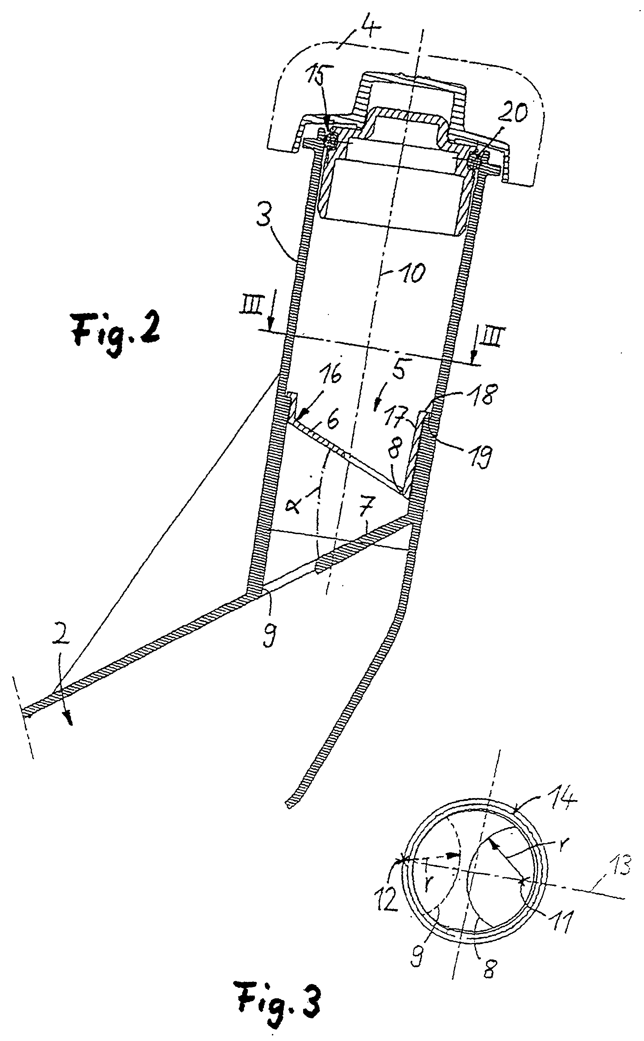

Der Schnittdarstellung nach Fig. 2 ist zu entnehmen, daß das Gehäuse des Ölbehälters 2 und der Einfüllstutzen 3 ein einteiliges Bauteil bilden, welches insbesondere aus Kunststoff besteht. Der Einfüllstutzen 3 ragt nach oben, so daß von oben über die Einfüllöffnung 15 Öl eingefüllt werden kann. Im Deckel 4 ist eine Ringdichtung 20 vorgesehen, um einen dichten Abschluß zu gewährleisten.

Im unteren Bereich des Einfüllstutzens 3 befindet sich ein Abscheider 5, der eine Schikane für Wassertröpfchen enthaltendes Gas bildet, das aus dem Behälter 2 aufsteigt. Der Abscheider 5 besteht aus zwei axial übereinander angeordneten Scheiben 6, 7, die den Strömungsquerschnitt im Einfüllstutzen vollständig ausfüllen und zweckmäßig ebenfalls aus Kunststoff bestehen. Die obere, der Einfüllöffnung 15 zugewandte Scheibe 6 ist Teil eines Rohrabschnitts 16, der als eigenständiges Bauteil in den Einfüllstutzen einsetzbar ist. Die Rohrwand 17 des Rohrabschnitts 16 weist an ihrer oberen Stirnseite einen radial nach außen gerichteten Stützflansch 18 auf, der sich an einer komplementär geformten Ringschulter 19 abstützt, welche am Innenmantel der Wandung des Einfüllstutzens 3 ausgebildet ist. Die Scheibe 6 bildet den stirnseitigen Abschluß auf der unteren, dem Behälter 2 zugewandten Seite des Rohrabschnitts 16.

Die untere Scheibe 7, die mit axialem Abstand zur oberen Scheibe 6 im Strömungsweg des Einfüllstutzens liegt, ist einteilig mit dem Einfüllstutzen 3 ausgebildet und bildet den stirnseitigen Abschluß des Einfüllstutzens zum Behälter 2 hin.

Die obere Scheibe 6 ist über einen an ihrer Unterseite angespritzten Haken mit der unteren Scheibe 7 verrastet.

In jede Scheibe 6, 7 ist eine Durchtrittsöffnung 8 bzw. 9 eingebracht, die groß genug ausgebildet ist, daß eingefülltes Öl ohne Behinderung in den Behälter einströmen kann und durch die außerdem Gas aus dem Behälter aufsteigen kann. Die Durchtrittsöffnungen 8, 9 sind auf radial gegenüberliegenden Seiten der Scheiben angeordnet und erstrecken sich jeweils bis zum Scheibenrand der betreffenden Scheibe, so daß der radial außenliegende Abschnitt jeder Durchtrittsöffnung mit dem angrenzenden Innenmantel des Einfüllstutzens fluchtet.

Beide Scheiben 6, 7 liegen winklig im Einfüllstutzen, wobei die Scheibenebene der oberen Scheibe 6 etwa um 25° gegenüber einer Ebene lotrecht zur Längsachse 10 des Einfüllstutzens geneigt ist und die Scheibenebene der unteren Scheibe 7 etwa um 35° gegenüber einer Ebene lotrecht zur Längsachse 10 des Einfüllstutzens geneigt ist. Die Position der Scheiben relativ zum Einfüllstutzen kann auf die jeweiligen Gegebenheiten angepaßt werden und von den vorgenannten Werten abweichen.

Die beiden Scheiben sind auch zueinander winklig angeordnet; der Winkel α zwischen den Scheiben beträgt bevorzugt etwa 60°, wobei gegebenenfalls auch andere Winkelbeträge zwischen den beiden Scheiben zweckmäßig sein können. Jede der Durchtrittsöffnungen 8, 9 der beiden Scheiben 6, 7 liegt im jeweiligen tiefer gelegenen Abschnitt der betreffenden Scheibe, so daß einströmendes Öl ohne weiteres in Form einer Kaskade in den Behälter 2 einfließen kann. Der Abstand zwischen den beiden Scheiben 6, 7 ist so gewählt, daß auch die einander zugewandten Abschnitte der Scheiben im Bereich der Durchtrittsöffnung 8 auf Abstand zueinander liegen.

In Fig. 3 sind die Durchtrittsöffnungen 8 und 9 in Draufsicht dargestellt- Die Durchtrittsöffnungen haben beide etwa den gleichen Radius r, der dem jeweiligen Radius jeder Scheibe entspricht. Die Kreismittelpunkte 12, 13 der Öffnungen 8, 9 liegen beide auf einer Mittelebene 13 durch den Einfüllstutzen, jeweils im Bereich radial entgegengesetzter Seiten im Einfüllstutzen. Der Kreismittelpunkt 11 der oberen Durchtrittsöffnung 8 liegt geringfügig innerhalb des Scheibenumfangs 14, der Kreismittelpunkt 12 der unteren Durchtrittsöffnung 9 liegt geringfügig außerhalb des Scheibenumfangs 14, so daß die Durchtrittsfläche der oberen Öffnung 8 größer ist als die Durchtrittsfläche der unteren Öffnung 9.

Anstelle eines teilkreis- öder eines kreisförmigen Querschnitts können die Durchtrittsöffnungen jede beliebige Querschnittsform einnehmen, beispielsweise elliptisch oder rechteckig, die groß genug bemessen ist, daß das Öl ohne Rückstau in den Behälter eingefüllt werden kann.

Bei Verwendung eines zylindrischen Einfüllstutzens sind die Scheiben 6, 7 aufgrund ihrer winkligen Lage im Einfüllstutzen elliptisch ausgebildet.

## Patentansprüche

1. Einfüllstutzen für einen Flüssigkeitsbehälter, mit einem Abscheider (5) zum Abscheiden von Flüssigkeit aus mit Flüssigkeitströpfchen durchsetzten Gasen, wobei der Abscheider (5) Scheiben (6, 7) umfaßt, die mit axialem Abstand im Einfüllstutzen (3) angeordnet sind und jeweils eine teilkreisförmige Durchtrittsöffnung (8, 9) aufweisen, die in Richtung der Längsachse (10) des Einfüllstutzens (3) gesehen zueinander versetzt angeordnet und auf radial gegenüberliegenden Seiten der Scheiben (6, 7) angeordnet sind,
**dadurch gekennzeichnet,**
- **daß** der Abscheider (5) zwei Scheiben (6,7) umfaßt und die Durchtrittsöffnung (8, 9) in der oberen, der Einfüllöffnung (15) des Einfüllstutzens (3) zugewandten Scheibe (6) größer ausgebildet ist als die Durchtrittsöffnung (9) in der unteren, der Einfüllöffnung (15) abgewandten Scheibe (7), und
- **daß** die beiden teilkreisförmig ausgebildeten Durchtrittsöffnungen (8, 9) etwa den gleichen Radius (r) aufweisen, der etwa dem Radius (r) einer der Scheiben (6, 7) entspricht, wobei der Mittelpunkt (12) der Durchtrittsöffnung (9) der unteren Scheibe (7) außerhalb des Scheibenumfangs (14) und der Mittelpunkt (11) der Durchtrittsöffnung (8) der oberen Scheibe (6) innerhalb des Scheibenumfangs (14) liegt.

2. Einfüllstutzen nach Anspruch 1,
**dadurch gekennzeichnet,**
**daß** in der Projektion in Richtung der Längsachse (10) des Einfüllstutzens (3) gesehen die Durchtrittsöffnungen (8, 9) in den Scheiben (6, 7) sich nicht überschneiden.

3. Einfüllstutzen nach Anspruch 1 oder 2,
**dadurch gekennzeichnet,**
**daß** die Mittelpunkte (11, 12) der Durchtrittsöffnungen (8, 9) auf einer Mittelebene (13) durch den Einfüllstutzen (3) liegen.

4. Einfüllstutzen nach einem der Ansprüche 1 bis 3,
**dadurch gekennzeichnet,**
**daß** die beiden Scheiben (6, 7) winklig im Einfüllstutzen (3) angeordnet sind.

5. Einfüllstutzen nach einem der Ansprüche 1 bis 4,
**dadurch gekennzeichnet,**
**daß** die beiden Scheiben (6, 7) winklig zueinander angeordnet sind.

6. Einfüllstutzen nach Anspruch 5,
**dadurch gekennzeichnet,**
**daß** der Winkel (α) zwischen den beiden Scheiben (6, 7) etwa 60° beträgt.

7. Einfüllstutzen nach einem der Ansprüche 1 bis 6,
**dadurch gekennzeichnet,**
**daß** die der Einfüllöffnung (15) abgewandte Scheibe (7) einteilig mit dem Einfüllstutzen (3) ausgebildet ist.

8. Einfüllstutzen nach einem der Ansprüche 1 bis 7,
**dadurch gekennzeichnet,**
**daß** die der Einfüllöffnung (15) zugewandte Scheibe (6) Teil eines in den Einfüllstutzen (3) einführbaren Rohrabschnitts (16) ist.

9. Einfüllstutzen nach Anspruch 8,
**dadurch gekennzeichnet,**
**daß** an der Rohrwand (17) des Rohrabschnitts (16) ein Stützflansch (18) ausgebildet ist, der auf einer Ringschulter (19) im Einfüllstutzen (3) aufliegt.

10. Einfüllstutzen nach einem der Ansprüche 1 bis 9,
**dadurch gekennzeichnet,**
**daß** der Einfüllstutzen (3) und der Abscheider (5) aus Kunststoff bestehen.

## Claims

1. Filling neck for a liquid container with a separator (5) for removing liquid from gases entraining liquid droplets, the separator (5) comprising plates (6, 7) disposed in the filling neck (3) at an axial distance apart and each having a part-circular-shaped passage orifice (8, 9) disposed offset from one another as viewed in the direction of the longitudinal axis (10) of the filling neck (3) and on radially opposite sides of the plates (6, 7),
**characterised in that**
- the separator (5) comprises two plates (6, 7) and the passage orifice (8, 9) in-the top plate (6) directed towards the filling orifice (15) of the filling neck (3) is of larger dimensions than the passage orifice (9) in the bottom plate (7) remote from the filling orifice (15), and
- the two part-circular-shaped passage orifices (8, 9) are of approximately the same radius (r) which substantially corresponds to the radius (r) of one of the plates (6, 7), the mid-point (12) of the passage orifice (9) of the bottom plate (7) lying outside the plate periphery (14) and the mid-point (11) of the passage orifice (8) of the top plate (6) lying inside the plate periphery (14).

2. Filling neck as claimed in claim 1,
**characterised in that**
in the projection as viewed in the direction of the longitudinal axis (10) of the filling neck (3), the passage orifices (8, 9) in the plates (6, 7) do not overlap.

3. Filling neck as claimed in claim 1 or 2,
**characterised in that**
the mid-points (11, 12) of the passage orifices (8, 9) lie on a mid-plane (13) through the filling neck (3).

4. Filling neck as claimed in one of claims 1 to 3,
**characterised in that**
the two plates (6, 7) are disposed at an angle in the filling neck (3).

5. Filling neck as claimed in one of claims 1 to 4,
**characterised in that**
the two plates (6, 7) are disposed at an angle relative to one another.

6. Filling neck as claimed in claim 5,
**characterised in that**
the angle (α) between the two plates (6, 7) is approximately 60°.

7. Filling neck as claimed in one of claims 1 to 6,
**characterised in that**
the plate (7) remote from the filling orifice (15) is integral with the filling neck (3).

8. Filling neck as claimed in one of claims 1 to 7,
**characterised in that**
the plate (6) directed towards the filling orifice (15) is part of a tube length (16) which can be inserted in the filling neck (3).

9. Filling neck as claimed in claim 8,
**characterised in that**
the tube wall (17) of the tube length (16) is provided with a support flange (18) which sits on an annular shoulder (19) in the filling neck (3).

10. Filling neck as claimed in one of claims 1 to 9,
**characterised in that**
the filling neck (3) and the separator (5) are made from plastics.

## Revendications

1. Tubulure de remplissage pour un réservoir à liquide, comprenant un séparateur (5) pour la séparation de liquide depuis des gaz chargés de gouttelettes de liquide, ledit séparateur (5) comprenant des disques (6, 7) qui sont agencés à distance axiale dans la tubulure de remplissage (3) et qui présentent chacun une ouverture traversante (8, 9) en forme de cercle partiel, lesdites ouvertures étant agencées en décalage les unes par rapport aux autres, vues en direction de l'axe longitudinal (10) de la tubulure de remplissage (3) et étant disposées sur des côtés radialement opposé des disques (6, 7),
**caractérisée en ce que** :
-- le séparateur (5) comprend deux disques (6, 7), et l'ouverture traversante (8, 9) ménagée dans la plaque supérieure (6) tournée vers l'ouverture de remplissage (15) de la tubulure de remplissage (3) est réalisée plus grande que l'ouverture traversante (9) dans la plaque inférieure (7) détournée de l'ouverture de remplissage (15), et
-- les deux ouvertures traversantes (8, 9) réalisées en forme de cercle partiel présentent approximativement le même rayon (r), lequel correspond approximativement au rayon (r) de l'un des disques (6, 7), le centre (12) de l'ouverture traversante (9) du disque inférieur (7) étant disposé à l'extérieur de la périphérie du disque (14), et le centre (11) de l'ouverture traversante (8) du disque supérieur (6) étant disposé à l'intérieur de la périphérie du disque (14).

2. Tubulure de remplissage selon la revendication 1, **caractérisée en ce que**, vues en projection en direction de l'axe longitudinal (10) de la tubulure de remplissage (3), les ouvertures traversantes (8, 9) dans les disques (6, 7) ne se recoupent pas.

3. Tubulure de remplissage selon l'une ou l'autre des revendications 1 et 2, **caractérisée en ce que** les centres (11, 12) des ouvertures traversantes (8, 9) sont disposés sur un plan médian (13) à travers la tubulure de remplissage (3).

4. Tubulure de remplissage selon l'une des revendications 1 à 3, **caractérisée en ce que** les deux disques (6, 7) sont agencés sous un angle dans la tubulure de remplissage (3).

5. Tubulure de remplissage selon l'une des revendications 1 à 4, **caractérisée en ce que** les deux disques (6, 7) sont agencés sous un angle l'un par rapport à l'autre.

6. Tubulure de remplissage selon la revendication 5, **caractérisée en ce que** l'angle (α) entre les deux disques (6, 7) s'élève à environ 60 °.

7. Tubulure de remplissage selon l'une des revendications 1 à 6, **caractérisée en ce que** le disque (7) détourné de l'ouverture de remplissage (15) est réalisé d'une seule pièce avec la tubulure de remplissage (3).

8. Tubulure de remplissage selon l'une des revendications 1 à cet, **caractérisée en ce que** le disque (6) tourné vers l'ouverture de remplissage (15) fait partie d'un tronçon de tube (16) susceptible d'être introduit dans la tubulure de remplissage (3).

9. Tubulure de remplissage selon la revendication 8, **caractérisée en ce qu'**une bride de soutien (18) est réalisée sur la paroi (17) du tronçon de tube (16), ladite de bride de soutien reposant sur un épaulement annulaire (19) dans la tubulure de remplissage (3).

10. Tubulure de remplissage selon l'une des revendications 1 à 9, **caractérisée en ce que** la tubulure de remplissage (3) et le séparateur (5) sont en matière plastique.
